# EUROPEAN PATENT APPLICATION

(11) **EP 2 636 777 A1**
(43) Date of publication of application: **11.09.2013**
(21) Application number: 13155288.7
(22) Date of filing: 14.02.2013
(51) Int. Cl.: D03D 13/00, B60C 27/18

(54) **Non-skid tyre cover**

(30) Priority: 08.03.2012 IT BS20120031
(71) Applicant: Agripool S.r.l., 25015 Desenzano Del Garda, Brescia (IT)
(72) Inventor: Maritano, Riccardo, I-25015 Desenzano del Garda (Brescia) (IT)
(74) Representative: Pulieri, Gianluca Antonio

(57) **Abstract**

A non-skid tyre cover (1) comprises a tread band (8) comprising at least one textile portion (10) consisting of a "herringbone" or "chevron" fabric which gives the cover particularly good road-holding properties.

## Description

The present invention relates to a non-skid tyre cover suitable to be fitted to a tyre to improve road holding on difficult terrain, especially in the presence of snow or ice.

To best perform such function, said covers must have particular road holding characteristics on the terrain. For example the non-skid tyre cover described in document EP-A1-2133221 in the name of the Applicant, provided with inserts in polymeric material, proves particularly effective.

A further example is the non-skid tyre cover described in the document WO 2007/039923 in the Applicant's name, which provides for a special shaping of the fabric.

The purpose of the present invention is to make a non-skid tyre cover which has particularly good road-holding characteristics.

Such purpose is achieved by a non-skid tyre cover according to claim 1 below. The dependent claims describe embodiment variants.

The characteristics and advantages of the non-skid tyre cover according to the present invention will be evident from the description given below, by way of a non-limiting example, according to the appended drawings, wherein:

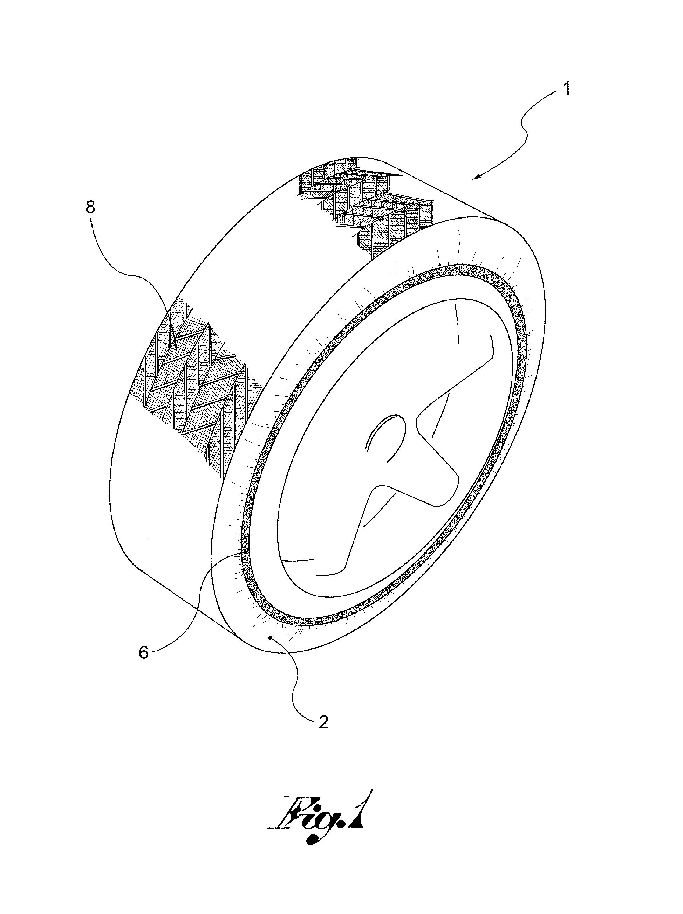

- figure 1 shows a perspective view of a non-skid tyre cover, according to one embodiment variant of the present invention, fitted to a tyre;

- figure 2 shows a detailed view of the external surface of the cover in figure 1, that is on the "right" side, facing the ground during normal use of the cover;

- figure 3 shows a detailed view of the inner surface of the cover in figure 1, that is to say on the "wrong" side, facing the tyre;

- figures 4 and 5 schematically show the arrangement of the warp and weft threads in a "herringbone" or "chevron" pattern.

According to the appended drawings, reference numeral 1 globally denotes a non-skid tyre cover, suitable to improve the road-holding of the wheels on difficult terrain, such as snow, ice, mud or the like.

The cover 1 is intended for fitting to the tyre of a wheel, so as to cover at least the tread thereof.

The cover 1, preferably, further covers, at least partially, the tyre walls on the inside and on the outside, facing the exterior of the vehicle.

Preferably, the cover 1 comprises an annular external side 2, substantially flat, suitable for covering at least partially the external side of the tyre.

Preferably, the external side 2 is composed of a tread band in textile material, folded in two parts, so that between these an external annular pocket is formed which runs along the cover annularly.

Preferably, moreover, the cover comprises external retention means suitable for wrinkling the external side, so as to hold the cover on the tyre and prevent it from slipping off.

For example the external retention means comprise elastic means, for example an elastic edge 6, joined to the free edge of the external side 2.

Similarly, the cover 1 comprises an internal side, an internal annular pocket and internal retention means.

Furthermore, the cover 1 comprises an annular tread band 8, suitable for covering the tyre tread at least partially.

The tread band 8 is composed of a rectangular band having the ends joined to give it an annular shape.

The tread band 8 comprises at least one textile portion 10, in fabric; preferably the entire tread band is made from textile and preferably the ends are partially overlapped (that is to say present an overlap portion) and sewn together.

Preferably, the tread band is composed of a plurality of textile portions joined together, preferably sewn together.

Moreover, at the axial annular rims, the annular tread band 8 is joined to the inner band and the outer band of the tyre respectively, for example by sewing.

The textile portion 10 is formed of a plurality of threads woven together to form a weave which has a weave base and a plurality of beads 12, projecting from said base.

The beads 12 are arranged in succession along a circumferential direction C of the tread band, so as to form a succession of peaks, at said beads, and of valleys 14, at the weave base.

Each bead extends along a bead direction Z, incident to the circumferential direction C, and in particular such as to form an acute angle of incidence A.

Said angle of incidence A is preferably between 15° and 60°, preferably between 20° and 40°, preferably 30°.

Moreover, the textile portion 10 comprises a plurality of flanked beads 16, axially flanking the beads 12, namely in an axial direction Y orthogonal to the circumferential direction C.

Preferably, each flanked bead 16 also extends along a bead direction Z, incident to the circumferential direction C, and in particular such as to form an acute angle of incidence A. Said angle of incidence A is preferably between 15° and 60°, preferably between 20° and 40°, preferably 30°.

Preferably, a bead 12 and a flanked bead 16 are arranged symmetrically in relation to the circumferential direction C, that is to say form the same angle of incidence A with it.

According to a preferred embodiment, the end of a flanked bead 16 is next to the end of a bead 12, so that the axial sequence of said beads 12 and said flanked beads 16 forms a raised front which, preferably, extends between the axial annular rims of the annular tread band 8.

According to a preferred embodiment, the raised front has an interrupted broken line pattern, formed of rectilinear tracts, each tract being composed of a bead 12, 16.

The textile portion 10 is composed of warp threads 18 and weft threads 20 suitably interwoven.

The regular weave of the weft threads and the warp threads constitutes the weave base of the fabric.

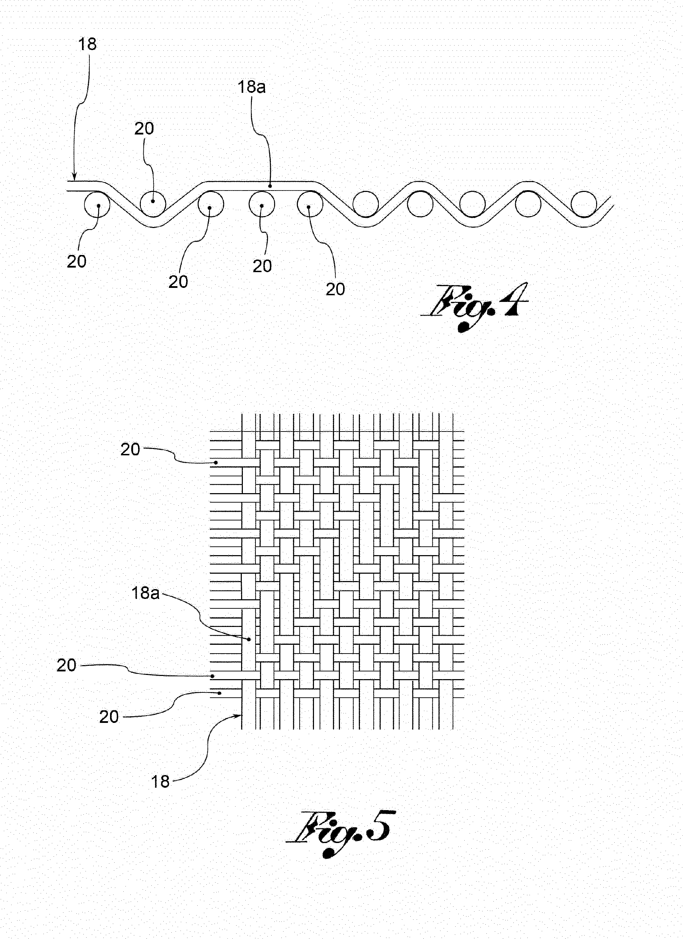

With reference to the right side of the textile portion, at predefined positions, some weft threads pass under a warp thread before resuming the regular weave of the weave base (figures 4 and 5); the raised warp thread thus forms a raised tract 18a prominent with respect to the weave base.

Each bead 12, 16 is formed by the flanking, in the weave direction (axial direction), of raised tracts 18a of the warp thread staggered in the warp direction (circumferential direction).

Preferably, the warp threads and the weft threads are different colours so as to make the beads stand out on the weave base.

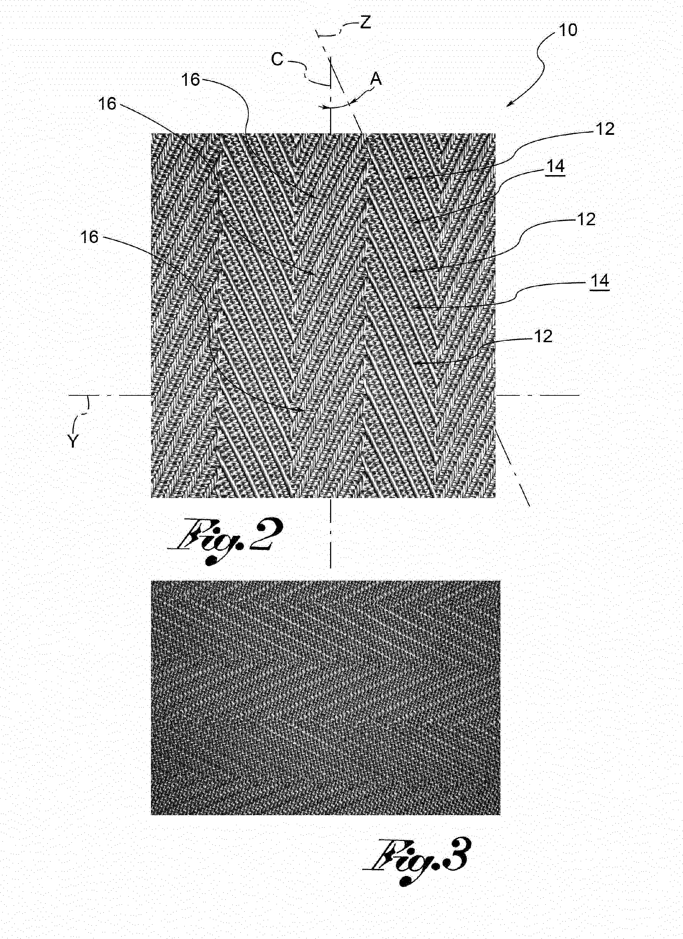

The wrong side of the textile portion (fig.3) is, instead, substantially smooth.

In other words, the textile portion 10 constitutes a "herringbone" or "chevron" type fabric.

According to a preferred embodiment, the thread used for the textile portion is a multifilament polypropylene thread, particularly useful given its scarce propensity to absorb humidity and its specific weight < 1 (generally equal to 0.9).

Preferably, the textile portion has a specific weight of 450g/m².

Preferably, moreover, the weft thread has different characteristics from the warp thread. For example the warp thread has a linear density of 600 denier, while the weft thread has a linear density of 1200 denier.

Preferably, moreover, the warp textile density is different from the weft textile density. For example in the warp there are 11 threads/cm, in the weft 10.5 threads/cm.

According to one embodiment, the cover 1 is completely closed on the external side, for example by means of a mesh.

Innovatively, the cover according to the present invention ensures optimal road-holding on the terrain and particularly limited production costs.

In fact, advantageously, the particular fabric significantly increases the road-holding characteristics of the cover, in that the beads tend to penetrate the snow, while the snow is accumulated in the valleys, thereby increasing overall the force discharged onto the terrain by the cover.

According to a further advantageous aspect, the cover gives the user a sensation of excellent road-holding, thanks to the pattern of the fabric.

According to yet a further advantageous aspect, the cover is highly reliable thanks to the production of the annular tread band in a single tread band sewn at the ends.

Advantageously, moreover, the band does not get impregnated with water and does not tend to become heavier during use.

It is clear that a person skilled in the art may make modifications to the cover described above so as to satisfy contingent requirements.

For example the tread band has a V-shaped raised front which occupies the entire width of the tread band. In other words, a single bead and a single flanked bead are present on the width of the tread band so as to form a single V.

According to one embodiment variant, the thread is monofilament.

According to further embodiment variants, the thread is in polyester or kevlar or a steel thread or a composite thread, for example comprising a steel core.

According to one embodiment, the tread band is composed of a plurality of portions placed alongside circumferentially, joined together by ultrasonic welding.

Such variants are also contained within the scope of protection defined by the following claims.

The characteristics described and/or represented for a single variant are to be understood as applicable to the other variants too.

## Claims

1. Non-skid tyre cover (1) comprising an annular tread band (8) comprising at least one textile portion (10) formed by a plurality of threads (18,20) woven together to constitute a weave which presents a weave base and a plurality of beads (12) projecting from said base, said beads (12) being arranged in succession in a circumferential direction (C) of the band so as to form a sequence of peaks and valleys (14), wherein each bead (12) extends in a bead direction (Z) incident to the circumferential direction (C).

2. Cover according to claim 1, wherein the textile portion (10) comprises a plurality of flanked beads (16) axially flanking the beads (12), namely in an axial direction (Y) orthogonal to the circumferential direction (C).

3. Cover according to claim 2, wherein the end of a flanked bead (16) is next to the end of the bead (12), so that the axial sequence of said beads (12) and said flanked beads (16) forms a raised front.

4. Cover according to claim 3, wherein the raised front extends as far as the annular axial rims of the annular tread band (8).

5. Cover according to any of the previous claims, wherein each bead (12) extends in a bead direction (Z) which forms an acute angle of incidence (A) with the circumferential direction (C).

6. Cover according to claim 5, wherein said angle of incidence (A) is between 15° and 60°, preferably between 20° and 40°, preferably 30°.

7. Cover according to any of the previous claims, when dependent on claim 2, wherein each flanked bead (16) extends in a bead direction (Z) which forms an acute angle of incidence (A) with the circumferential direction (C).

8. Cover according to claim 7, wherein said angle of incidence (A) is between 15° and 60°, preferably between 20° and 40°, preferably 30°.

9. Cover according to claim 7 or 8, wherein the bead (12) and the flanked bead (16) flanking said bead (12) are positioned symmetrically to the circumferential direction (C).

10. Cover according to any of the previous claims, wherein the textile portion (10) is composed of interwoven warp (18) and weft (20) threads, wherein the regular interweaving of warp and weft threads constitutes the weave base of the textile, and wherein some weft threads are positioned under a warp thread before resuming the regular weave of the weave base, so that the raised warp thread forms a raised tract (18a) prominent with respect to the weave base, each bead (12,16) being formed by the flanking, in the weave direction, of said raised tracts (18a) of the warp thread (18) staggered in the warp direction.

11. Cover according to any of the previous claims, wherein the warp thread and the weft thread have a different colouring.

12. Cover according to any of the previous claims, wherein the thread is multifilament or monofilament.

13. Cover according to any of the previous claims, wherein the thread is in polyester or polypropylene.

14. Cover according to any of the previous claims, wherein the whole tread band (8) is in textile.

15. Cover according to any of the previous claims, wherein the bead (12) extends without interruption between the axial annular rims of the tread band (8).
